# EUROPEAN PATENT SPECIFICATION

(11) **EP 0 333 524 B1**
(45) Date of publication and mention of the grant of the patent: **05.05.1993**
(21) Application number: 89305171.4
(22) Date of filing: 10.09.1984
(51) Int. Cl.: B65D 90/48, B65D 88/42, G01F 23/16, B65D 88/60

(54) **Liquid container with a follower**
Flüssigkeitsbehälter mit einem Regelfolger
Conteneur à liquide avec un suiveur

(30) Priority: 01.12.1983 US 557045; 29.02.1984 US 584744
(43) Date of publication of application: 20.09.1989
(62) Divisional of application: 84306160.7
(73) Proprietor: Fabricated Metals, Inc., San Leandro California 94577 (US)
(72) Inventor: Coleman, Clarence Buyer, County of Alameda (US)
(74) Representative: BROOKES & MARTIN

(56) References cited:
- GB-A- 1 445 996
- US-A- 2 427 171

## Description

The present invention relates in general to bulk material container having a follower therein.

Fabricated Metals, Inc. of San Leandro, California, United States of America, has heretofore manufactured and solid a bulk material container having a material level follower disposed in the shell thereof. The vertical position of the material level follower varies with the level of the bulk material within the shell.

The U.S. patent to Cranz, No. 1,893,162, discloses a tank having a floating roof provided with flexible sealing means surrounding the periphery of the floating roof and engaging the internal wall of the tank.

In the U.S. patent to Coleman, No. 3,781,942, issued on January 1, 1974, for Follower For Material Containers, there is disclosed a container for bulk material. A flexible follower assembly is disposed within the container. The flexible follower freely follows the height of the bulk material within the container.

The U.S. patent to Kleritj, No. 530,592, issued on December 11, 1894 for Magnetic Water Gauge, discloses a container for liquid. Mounted exteriorly of the container is a liquid level vessel which communicates with the container. The level of the liquid in the vessel follows the level of the liquid in the container. A float is disposed in the liquid vessel to follow the height of liquid in the vessel. A magnet is carried by the float. Exteriorly of the vessel and mounted thereon is a tube. Disposed within the tube is vertically spaced relation are electrical switches. The height of the magnet selectively operates a switch within the tube. Certain of the switches are connected to an electrical alarm circuit.

The U.S. patent to Wilder et al., No. 3,942,526, issued on March 9, 1976 for Alarm System For Intravenous Infusion Procedure, discloses a drop chamber in which is disposed a magnetic float. The float level reflects the height of the liquid in a container communicating with the drop chamber. A proximity switch is attached to the exterior of the drop chamber. When the liquid in the container falls below a predetermined height, the magnet in the magnetic float activates the proximity switch to operate an alarm.

The U.S. patent to Guest, No. 2,074,959, issued on March 23, 1937, for Fuel Tank Gauge, discloses a follower disposed on the surface of liquid contained in a tank. One end of a cable is attached to the follower. The opposite end of the cable is tensioned by attachment to an anchored spring. Intermediate the ends thereof, the cable advances through a dial. Movement of the cable actuates an indicator of the dial to register the level of the liquid in the container.

In the U.S. patent to Quist, No. 2,677,816, issued on May 4, 1954, for Floating Roof Tank Warning Device, there is disclosed a floating roof that follows the level of liquid in a storage tank. A vertically disposed liquid depth indicator is mounted exteriorly of the storage tank. One end of a cable is attached to a float mechanism incorporated in the floating roof. The other end of the cable is attached to a weight marker. Movement of the weight marker along the vertical indicator shows the level of the liquid in the container.

The U.S. patent to Loeffler, No. 1,658,449, issued on February 7, 1928, for Fluid Level Indicator For High Pressure Vessels Or Containers, discloses a steam boiler and a liquid level gauge in communication with the steam boiler. The liquid level gauge is disposed exteriorly of the steam boiler. A float is disposed in a vessel of the liquid level gauge. One end of the cable is attached to the float. The other end of the cable is attached to a counterweight. Intermediate the ends thereof, the cable passes through a U-shaped tube. Surrounding the section of the U-shaped tube in the vicinity of the counterweight are magnetic coils. The counterweight is also a magnetic core for varying the magnetic fields produced by the magnetic coils. As the level of the float in the liquid level gauge varies, the magnetic fields produced by the coils will vary. A level indicator adjacent the magnetic coils will have the position of the indicator pointer thereof vary in response to variations in magnetic fields resulting from the varying position of the counterweight.

The U.S. patent to Noyes et al., No. 4,290,059, issued on September 15, 1981, for Liquid Level Alarm For Remotely Indicating When Less Than A Predetermined Quantity Of Fuel Oil Remains In A Storage Tank And Method Of Installing The Same, discloses a fuel storage tank and a fuel oil gauge. The gauge includes a tube. Within the tube is a magnetic disc attached to a rod. The rod extends into the storage tank and is mechanically actuated by a float disposed on the surface of the liquid in the storage tank. A magnetically actuated switch is mounted on the tube. When the level of the magnetic disc in the tube reaches a predetermined height, the magnetically actuated switch is operated to operate an alarm.

The U.S. patent to Anderson, No. 3,159,301, issued on December 1, 1964, for Floating Diaphragm For Pressure Tanks, discloses a pressure tank with a floating diaphragm. A hollow buoyant float ring is mounted within the diaphragm. The float ring is formed from complementary half sections which are water-tight and fluid tight. The half sections are hinged together.

The present invention provides a container for bulk material comprising: a) a shell for storing bulk material, said shell being formed with a vertical inner surface; and b) a rigid, floatable follower disposed in said shell in constant contact with the upper surface of the bulk material stored in said shell, and supporting a yieldable wiper for wiping the inner surface of said shell as bulk material is removed from said shell, characterised in that said follower comprises an enclosed rigid hollow body, a rigid plate mounted on top of the hollow body and in axial alignment therewith and a flexible wiper mounted between the hollow body and the rigid plate and extending radially outwardly from the body of the plate for engaging the inner surface of the shell in a wiping action; the rigid plate having an upwardly curved wall at the perimeter thereof for guiding the flexing action of the wiper at the perimeter thereof during wiping of the inner surface of the shell when the follower moves downwardly in the container, and the upper surface of the hollow body being downwardly curved at the perimeter thereof for guiding the flexing action of the wiper at the perimeter thereof during wiping of the inner surface of the shell when the follower moves upwardly in the container.

Figure 1 is an elevation view of a bulk material container embodying the present invention.

Figure 2 is a fragmentary elevation view of the bulk material container shown in Figure 1 with a section thereof cut-a-way to illustrate the floatable rigid follower, the magnet carried therewith, and the magnetic switch mounted exteriorly of the shell of the bulk material container.

Figure 3 is a horizontal sectional view of the modified bulk material container shown in Figure 1 taken along line 3-3 of Figure 1.

Figure 4 is an enlarged fragmentary vertical sectional view of the floatable rigid follower shown in Figures 1 to 3 taken along line 4-4 of Figure 3 illustrating the magnet carried on the floatable rigid follower and illustrating the magnetic switch mounted exteriorly of the shell of the bulk material container shown with a diagrammatic illustration of an electrical circuit for indicating the height of the floatable rigid follower.

Figure 5 is a plan view of the modified bulk material container shown in Figure 1.

Figure 6 is a vertical section taken along line 6-6 of Figure 5 to illustrate a locking ring for the modified bulk material container shown in Figure 1.

Figure 7 is an elevation view of the locking ring shown in Figure 6 taken along line 7-7 of Figure 5.

Figure 8 is a plan view of a modification of the bulk material container shown in Figures 1 to 5 in which the floatable rigid follower serves as a selectively positioned cover for the container.

Figure 9 is an enlarged fragmentary vertical sectional view of the positionable rigid follower for the modified bulk material container shown in Figure 8.

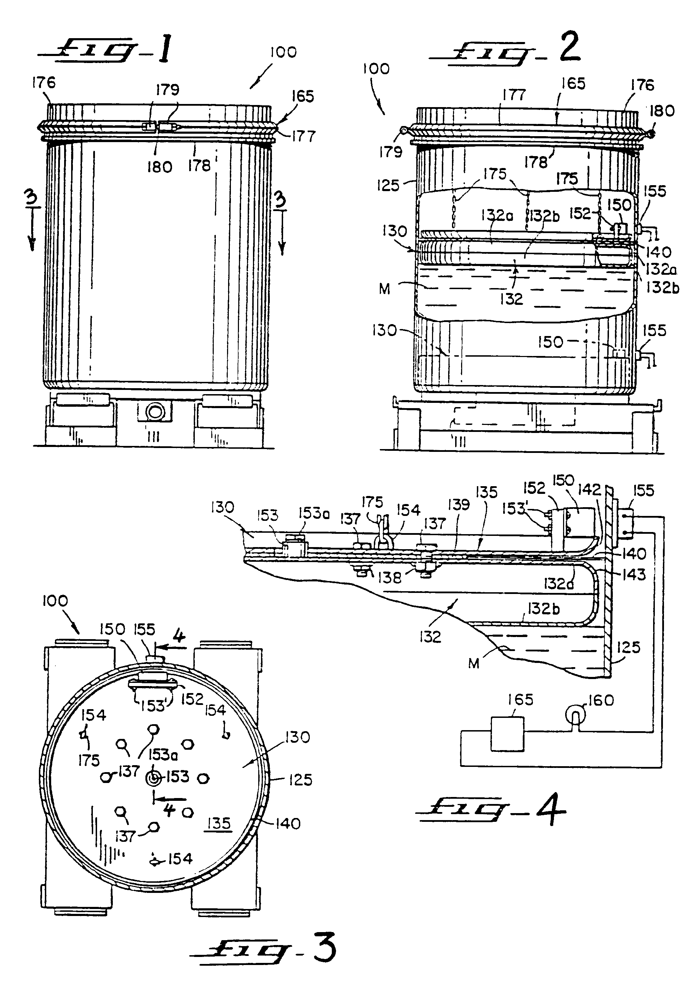

Illustrated in Figures 1 to 4 is a bulk material container 100 holding viscous material M (Figures 2 and 4) in the process of either being withdrawn or placed into a shell 125 of the container 100 through a conduit 111 (Figure 1) by means of a suitable pump assembly, not shown. In the preferred embodiment, the pump assembly is an exterior pump. The shell 125 of the container 100 may be made of suitable material, such as plastics, mild steel, stainless steel or aluminium.

A rigid follower 130 (Figures 2 to 4) is disposed in the shell 125 of the container 100 and follows the level of the surface of the material M. The floatable rigid follower 130 comprises a buoyant, hollow cylindrical body 132 with contiguous half sections 132a and 132b. The body 132, in the preferred embodiment, is made of plastic, aluminum or stainless steel. The outer diameter of the body 132 is slightly less than the inner diameter of the shell 125. The rigid follower 130 also comprises a dish-shaped plate 135, which in the preferred embodiment, is made of aluminum or stainless steel. The plate 135 has a diameter substantially equal to the diameter of the body 132. While the follower 130, in the exemplary embodiment, has a cylindrical configuration, it is apparent that the follower can have other suitable configurations conforming to the cross-sectional contour of the shell.

Disposed between the body 132 and the plate 135 is a flexible, annular wiper 140 (Figures 2 and 4) made of suitable material, such a neoprene or rubber. A cylindrical spacer 139 (Figure 4) is disposed in the opening of the annular wiper 140 for reducing distortion at the outer edge of the wiper 140. The wiper 140 is secured between the body 132 and the plate 135 by means of bolts 137 and the nuts 138 arranged in a circle with spacer 139. The wiper 140 is held by the rigid follower 130 so as not to distort the outer edge thereof. The bolts 137 extend through the plate 135, through the spacer 139 and into the section 132a of the body 132. Preferably, the nuts 138 are welded to the section 132a at the inner wall thereof and the heads of the bolts 137 are secured against the plate 135. The thickness of the spacer 139 and the wiper 140 are such that when the bolts 137 and the nuts 138 secure the plate 135 and the section 132a of the body 132 together in a tight fitting relation, the wiper 140 is disposed between the plate 135 and the body 132. After the bolts 137 and the nuts 138 are installed, the section 132b of the body 132 is secured in fluid tight relation with the section 132a by suitable means, such as welding.

The wiper 140 extends radially outwardly from the body 132 and the plate 135 for engaging the inner wall of the shell 125 in the wiping action. Confronting walls 142 and 143 (Figure 4) of the dish-shaped plate 135 and the section 132a, respectively, are curved along the periphery thereof. The wall 142 is curved upwardly and outwardly at the perimeter thereof. The perimeter of the wiper 140 extends between but radially outwardly of the curved portions of the walls 142 and 143. The wiper 140 along its perimeter is guided and restrained in its yieldable action by the contour of the perimeters of the walls 142 and 143 during the wiping action thereof against the inner wall of the shell 125.

Fixed to the top wall of the plate 135 is a suitable permanent magnet 150 (Figures 2 to 4). In the exemplary embodiment, the magnet 150 is secured to the top wall of the plate 135 by means of a block 152 that is secured to the top wall of the plate 135 by suitable means, such as a weldment. Nuts and bolts 153' secure the magnet 150 to the block 152. In the exemplary embodiment, the magnet 150 has an approximate pull of 120 pounds. Mounted in the top wall of the plate 135 at the axial center thereof is a suitable coupling 153 with a plug 153a (Figures 3 and 4). Should it be desired to fill the body 132 with a gas or the like, the coupling 153 will provide the connection for the supply of gas or liquid. After the body 132 is filled with the gas, the coupling 153 is disconnected and the opening is sealed with plug 153a. Spaced radially outwards from the coupling 153 at equi-angular distances apart are U-shaped bolts 154. The bolts 154 are secured to the plate 135 by weldments.

Mounted on the outer wall of the shell 125 is suitable means responsive to a magnetic field, such as a magnetic switch 155 (Figures 2 to 4). The switch 155 can be fixed to the shell 125 or can be detachably secured to the shell 125. The height of the switch 155 can be selected dependent on the material level indicator function. The height of the switch 155 can be selected to indicate when the level of the material M in the shell 125 of the container 100 has dropped to a point requiring refilling or the replacement by a filled bulk material container or when the level of the material M in the shell 125 of the container 100 has reached a height requiring the cessation of the filling operation. The switch 155 can be moved vertically to determine the location of the height of the material M in the shell 125 of the container 100.

Connected to each of the magnetic switches 155 is a suitable level indicator 160 (Figure 4) such as a light or an alarm, or a relay to activate a level indicator, or a solenoid valve. In the exemplary embodiment, a suitable source of power 165 is connected in series with the magnetic switch 155 and the level indicator 160. It is within the contemplation of the present invention that the magnetic switches 155 can be in the form of a magnetic activated device that indicates level, such as a magnetically actuated flag.

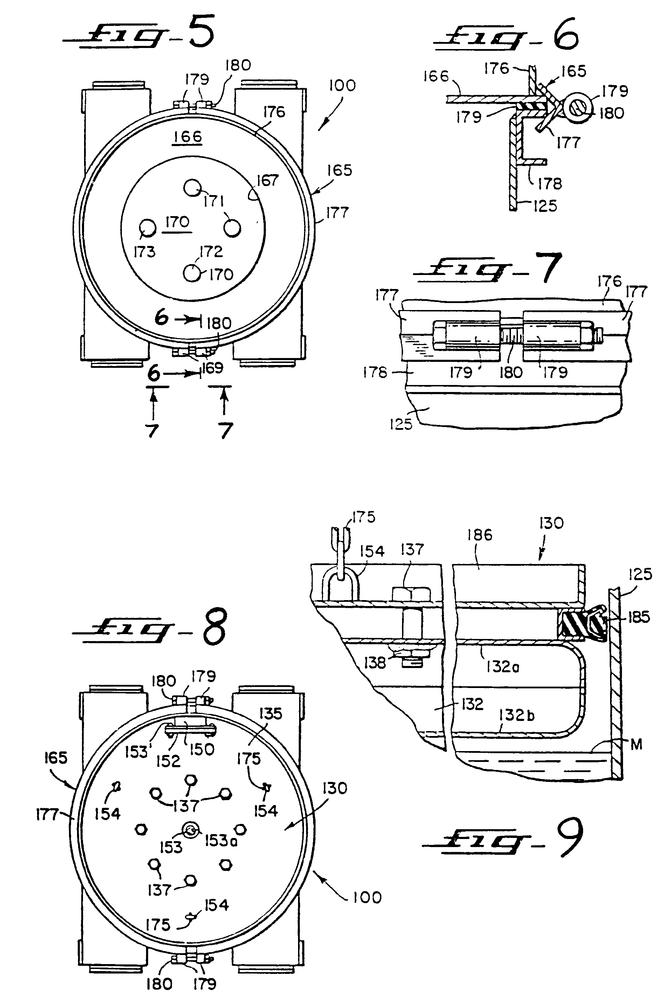

A removable stacking ring 176 (Figures 1, 2, 5 and 6) encircles the shell 125 and is attached to a removable top plate 166. A locking ring 165 (Figures 1, 2 and 5 to 7) secures the top plate 166 to the upper section fo the shell 125. Formed in the top plate 166 is an access opening 167 (Figure 1), which is of conventional size and type.

The access opening 167 of the container 100 receives a cover 170 made of suitable material, such as mild steel. Formed in the cover 170 are openings for air ventilation plugs 171, for a vacuum relief valve 172 and for a pressure relief valve 173. In order to install the floatable rigid follower 130 into the shell 125 and to remove the rigid follower 130 from the shell 125, the top plate 166 along with the stacking ring 176 are removed from the shell 125. To raise and lower the floatable rigid follower 130 manually relative to the shell 125, chains 175 (Figures 2 and 4) are attached at one end to the U-bolts 154. At the other end, the chains 175 are detachably secured in a well-known manner to the bottom wall of the top plate 166. The length of the chains 175 is sufficient to permit the rigid follower 130 to be lowered within the shell 125 to the fullest extent.

The locking ring 165 (Figures 1, 2 and 5 to 7) comprises a split ring 177. Projecting from the confronting ends of the split ring 77 are ears 179. Received by each pair of confronting ears 179 is a threaded bolt 180. Suitable nuts threaded on the associated bolt 180 for each pair of confronting ears 179 hold the split ring 179 in a locked state. The locking ring 165, when in a locked state, holds the top plate 166 securely to a flange 178 (Figure 6), which is welded to the top of the shell 125. An annular gasket 179 is disposed between the top plate 166 and the flange 178. For removing the top plate 166 from the shell 125, the nuts are removed from the associated bolts 180 and the bolts 180 are removed from the associated ears 179. Thereupon, the split ring 177 is removed from the top plate 166 and the flange 178.

The floatable rigid follower 130 may, in the alternative, be employed as a positionable cover for the shell 125 (Figures 9 and 12). To employ the floatable rigid follower 130 as a positionable cover for the shell 125, an annular inflatable seal 185 is secured between the plate 186 and the floatable body 132 in lieu of the wiper 140. The inflatable seal 185 is a conventional and well-known seal manufactured by Kirkhill Rubber Co. of Los Angeles, California, U.S.A., as catalogue number F-13763.

When the inflatable seal 185 is in a deflated state (Figure 9), the floatable rigid follower 130 is in constant contact with the surface of the bull material M and follows the level of the bull material M in the shell 125. When the inflatable seal 185 is inflated by a suitable gas, such as air, the seal 185 engages the wall of the shell 125 and the rigid follower 130 remains at an adjustable height within the shell 125. The capacity of the container 100 is then determined by the height of the rigid follower 130 within the shell 125.

The replacement of the wiper 140 by the inflatable seal 185 enables the rigid follower 130 to be used as a cover in place of a top plate, such as top plate 166, or can be used in addition to a top plate. The height of rigid follower 130 varies with the height of the level of the bull material M in the shell 125, when the seal 185 is deflated. The height of the rigid follower 130 remains at an adjustable height when the seal 185 is inflated to set the fixed storage capacity for the container 100.

## Claims

1. A container (100) for bulk material (M) comprising:
a) a shell (125) for storing bulk material (M), said shell (125) being formed with a vertical inner surface; and
b) a rigid, floatable follower (130) disposed in said shell (125) in constant contact with the upper surface of the bulk material (M) stored in said shell (125), and supporting a yieldable wiper (140) for wiping the inner surface of said shell (125) as bulk material (M) is removed from said shell (125), characterised in that said follower (130) comprises a closed rigid hollow body (132), a rigid plate (135) mounted on top of the hollow body and in axial alignment therewith and a flexible wiper (140) mounted between the hollow body and the rigid plate and extending radially outwardly from the body and the plate for engaging the inner surface of the shell in a wiping action; the rigid plate (135) having an upwardly curved wall at the perimeter thereof for guiding the flexing action of the wiper at the perimeter thereof during wiping of the inner surface of the shell when the follower moves downwardly in the container, and the upper surface of the hollow body being downwardly curved at the perimeter thereof for guiding the flexing action of the wiper at the perimeter thereof during wiping of the inner surface of the shell when the follower moves upwardly in the container.

2. A container as claimed in Claim 1, wherein the flexible wiper is in the form of a flat annulus.

3. A container as claimed in Claim 2, wherein a cylindrical spacer (139) is disposed in the opening of the annular wiper between the hollow body (132) and the rigid plate (135).

4. A container as claimed in any preceding claim wherein the hollow body is a buoyant hollow cylindrical body formed of contiguous half sections (132a, 132b).

## Patentansprüche

1. Behälter (100) für eine fließfähige Masse (M) mit:
a) einem Gehäuse (125), um die fließfähige Masse (M) aufzubewahren, wobei das Gehäuse (125) mit einer vertikalen inneren Oberfläche versehen ist; und
b) einem starren, schwimmfähigen Folgeregler (130), der in dem Gehäuse (125) in dauerndem Kontakt mit der oberen Oberfläche der in dem Gehäuse (125) aufbewahrten fließfähigen Masse (M) angeordnet ist und der zum Wischen der inneren Oberfläche des Gehäuses (125) einen nachgebenden Wischer (140) stützt, wenn fließfähige Masse (M) aus dem Gehäuse (125) entfernt wird, **dadurch gekennzeichnet**, daß der Folgeregler (130) einen geschlossenen, starren, hohlen Körper (132), eine auf dem hohlen Körper in axialer Ausrichtung mit diesem angebrachte, starre Scheibe (135) und einen zwischen dem hohlen Körper und der starren Scheibe angeordneten und sich von dem Körper und der Platte radial nach außen erstreckenden, nachgebenden Wischer (140) aufweist, um mit der inneren Oberfläche des Gehäuses wischend im Eingriff zu stehen; daß die starre Scheibe (135) umfänglich eine nach oben gekrümmte Wand aufweist, um die biegsame Betätigung des Wischers an seinem Umfang während des Wischens der inneren Oberfläche des Gehäuses zu führen, wenn der Folgeregler sich in dem Behälter nach unten bewegt, und daß die obere Oberfläche des hohlen Körpers umfänglich nach unten gebogen wird, um die biegsame Betätigung des Wischers an seinem Umfang während des Wischens der inneren Oberfläche des Gehäuses zu führen, wenn der Folgeregler sich in dem Behälter nach oben bewegt.

2. Behälter nach Anspruch 1, bei dem der nachgebende Wischer die Form eines flachen Kreisringes aufweist.

3. Behälter nach Anspruch 2, bei dem ein zylindrisches Abstandsstück (139) in der Öffnung des ringförmigen Wischers zwischen dem hohlen Körper (132) und der starren Scheibe (135) vorgesehen ist.

4. Behälter nach einem der vorstehenden Ansprüche, bei dem der hohle Körper ein schwimmender, hohler, zylindrischer Körper ist, der aus aneinandergrenzenden Halbgliedern (132a, 132b) besteht.

## Revendications

1. Conteneur (100) pour matières en vrac (M), comprenant :
a) une enveloppe (125) pour contenir la matière en vrac (M), cette enveloppe (125) ayant une surface intérieure verticale et
b) un organe suiveur rigide (130), pouvant flotter, disposé dans ladite enveloppe (125) en contact constant avec la face supérieure de la matière en vrac (M) contenue dans l'enveloppe (125), et portant un élément balayeur flexible (140) pour le balayage de la surface intérieure de l'enveloppe (125) à mesure que de la matière en vrac (M) est enlevée de cette enveloppe (125), caractérisé en ce que l'organe suiveur (130) comprend un corps creux rigide fermé (132), une plaque rigide (135) montée au sommet de ce corps creux en alignement axial avec lui et un élément balayeur flexible (140) monté entre le corps creux et la plaque rigide et s'étendant en sens radial vers l'extérieur à partir du corps et de la plaque pour venir en contact avec la surface intérieure de l'enveloppe avec un effet de balayage, la plaque rigide (135) ayant une paroi incurvée vers le haut à son périmètre pour guider la flexion de l'élément balayeur au périmètre de celui-ci pendant le balayage de la surface intérieure de l'enveloppe quand l'organe suiveur se déplace vers le bas dans le conteneur et la surface supérieure du corps creux étant incurvée vers le bas à son périmètre pour guider la flexion de l'élément balayeur au périmètre de celui-ci pendant le balayage de la surface intérieure de l'enveloppe quand l'organe suiveur se déplace vers le haut dans le conteneur.

2. Conteneur selon la revendication 1 dans lequel l'élément balayeur flexible a la configuration d'un anneau plat.

3. Conteneur selon la revendication 2 dans lequel une entretoise cylindrique (139) est disposée dans l'ouverture de l'élément balayeur annulaire entre le corps creux (132) et la plaque rigide (135).

4. Conteneur selon l'une quelconque des revendications précédentes dans lequel le corps creux est un corps creux flottant cylindrique composé de deux demi-parties assemblées (132a, 132b).
